# EUROPÄISCHE PATENTANMELDUNG

(11) **EP 1 207 142 A2**
(43) Veröffentlichungstag der Anmeldung: **22.05.2002**
(21) Anmeldenummer: 01127003.0
(22) Anmeldetag: 14.11.2001
(51) Int. Cl.: C04B 26/02, F01N 3/28

(54) **Lagerungsmatte für die Lagerung eines Abgaskatalysators**

(30) Priorität: 16.11.2000 DE 10057158
(71) Anmelder: Asglawo Gesellschaft mit beschränkter Haftung - Stoffe zum Dämmen und Verstärken, 09627 Hilbersdorf (DE)
(72) Erfinder: Kohlsdorf, Bernhard, 09600 Niederschöna (DE); Schierz, Claus Dipl.-Ing., 09599 Freiberg (DE)
(74) Vertreter: Albrecht, Rainer Harald, Dr.-Ing.

(57) **Zusammenfassung**

Die Erfindung betrifft eine Lagerungsmatte für die Lagerung eines für die Reinigung von Kraftfahrzeugabgasen eingesetzten Abgaskatalysators in einem metallischen Katalysatorgehäuse. Die Lagerungsmatte besteht aus einem zu einem textilen Flächengebilde verarbeiteten Fadenmaterial, das aus voluminösen, temperaturbeständigen und mit paralleler Ausrichtung zu einem Faden gebündelten Garnen sowie einer Fadenummantelung, die sich bei Erhitzung zersetzt, besteht. Entlang den Rändern des Flächengebildes ist ein Kantenschutz aus temperaturbeständigen Fäden vorgesehen.

## Beschreibung

Die Erfindung betrifft eine Lagerungsmatte für die Lagerung eines für die Reinigung von Kraftfahrzeugabgasen eingesetzten Abgaskatalysators in einem metallischen Katalysatorgehäuse. Die Lagerungsmatte wird am Umfang des keramischen Trägerkörpers eines Abgaskatalysators angeordnet und dichtet den Ringspalt zwischen keramischem Trägerkörper und dem aus einem metallischen Werkstoff bestehenden Katalysatorgehäuse. Sie soll eine sichere, erschütterungsfreie Lagerung des keramischen Trägerkörpers ermöglichen und muss eine Änderung der abzudichtenden Ringspaltbreite ausgleichen, wenn das metallische Katalysatorgehäuse sich bei der durch die Verbrennungsabgase vorgegebenen Betriebstemperatur ausdehnt. Die Lagerungsmatte bildet ferner eine Wärmedämmschicht an der Innenwand des Katalysatorgehäuses und reduziert die nach Außen übertragenen Schallgeräusche der strömenden Abgase.

Aus WO 00/36284 ist eine mechanisch verfestigte Lagerungsmatte aus texturierten Garnen bekannt. Die Garne sind durch Steppnähte unter Zugspannung im Flächengebilde fixiert. Die Steppnähte sind mit einem Nähfaden ausgeführt, dessen Temperaturbeständigkeit kleiner ist als die Betriebstemperatur der Lagerungsmatte. Bei Erhitzen der Lagerungsmatte werden die Steppnähte zerstört, wobei Verformungsenergie des texturierten Garnes freigesetzt wird und das Volumen der Lagerungsmatte zunimmt. Die Expansionseigenschaft der Lagerungsmatte beruht darauf, dass texturierte Garne bei der textilen Weiterverarbeitung zu einer Matte unter Zugspannung abgelegt werden und diese Zugspannung mechanisch fixiert wird. Diese Technik schränkt die Möglichkeiten der Mattenherstellung und Mattenkonfektionierung ein.

Eine aus DE-U 93 11 571 bekannte Lagerungsmatte besteht aus kurzen anorganischen Fasern, einem organischen Bindemittel sowie partikelförmigen Einlagerungen aus einem Blähmaterial, z. B. Glimmer oder Vermiculit, welches unter der Wirkung von Wärme expandiert und eine Volumenzunahme der Lagerungsmatte bei Betriebstemperatur bewirkt. Die im Bindemittel eingelagerten anorganischen Fasern bestehen aus keramischen Stapelfasern oder aus zerkleinerten SiO₂-Filamenten mit einer durchschnittlichen Länge von einigen Millimetern. Eine Lagerungsmatte mit kurzen anorganischen Fasern neigt zu Erosion und Abrieb. Sowohl Fasern als auch partikelförmiges Blähmaterial werden mit den strömenden Verbrennungsabgasen ausgetragen, mit der Folge, dass die Abdichtung des Ringspaltes schlechter wird und sich die Erosion verstärkt. Bei Verwendung eines Fasermaterials aus längeren Filamenten ist die Gefahr, dass Fasern ausgeblasen werden, zwar geringer, doch behindern Brückenbildung und Vernetzung der Filamente eine Expansion der Matte und kommt die Wirkung des Blähmaterials nicht voll zum Tragen.

Der Erfindung liegt die Aufgabe zugrunde, eine Lagerungsmatte mit der eingangs beschriebenen Zweckbestimmung anzugeben, die ausblassicher ist und ein hohes, gegenüber dem zuvor beschriebenen Stand der Technik verbessertes Expansionsvermögen aufweist. Zur Herstellung der Matte sollen ferner konventionelle Verfahren zur Textilverarbeitung anwendbar sein.

Gegenstand der Erfindung und Lösung dieser Aufgabe ist eine Lagerungsmatte für die Lagerung eines für die Reinigung von Kraftfahrzeugabgasen eingesetzten Abgaskatalysators in einem metallischen Katalysatorgehäuse, bestehend aus
1.1) einem zu einem textilen Flächengebilde verarbeiteten Fadenmaterial, das aus voluminösen, temperaturbeständigen und mit paralleler Ausrichtung zu einem Faden gebündelten Garnen sowie einer Fadenummantelung, die sich bei Erhitzung zersetzt, besteht, und
1.2) einem Kantenschutz aus temperaturbeständigen Fäden entlang den Rändern des Flächengebildes.

Das Fadenmaterial besteht vorzugsweise aus texturierten Garnen aus anorganischen Stapelfasern oder Filamenten, die parallel ausgerichtet zu Fäden mit einem Durchmesser zwischen 3 und 12 mm verdichtet sind. Ein Fadenmaterial mit einem Durchmesser von etwa 6 mm ist besonders bevorzugt. Als temperaturbeständige Materialien kommen vornehmlich Textilglasfasern, Basaltfasern, SiO₂-Fasern, Quarzfasern oder Aluminiumsilikatfasern in Betracht. Voluminöse Garne aus anderen anorganischen oder organischen Materialien mit einer Temperaturbeständigkeit von mindestens 400 °C sollen nicht ausgeschlossen sein. Die Fadenummantelung besteht zweckmäßig aus Nähfäden, die um das Faser- bzw. Filamentbündel eines Fadens geführt sind und kann beispielsweise als Flechtwerk ausgebildet sein. Die Fadenummantelung besteht vorzugsweise aus Baumwoll- oder Viskosefäden, wobei andere Materialien, deren Temperaturbeständigkeit 200 °C nicht wesentlich überschreiten sollte, nicht ausgeschlossen sind.

Das erfindungsgemäße Fadenmaterial, aus dem die Lagerungsmatte gefertigt ist, weist ein hohes Expansionsvermögen auf, wenn das Fadenmaterial auf die Betriebstemperatur der Lagerungsmatte erhitzt wird. Erfindungswesentlich ist, dass die in einem Faden gebündelten Garne parallel zueinander ausgerichtet sind und nicht miteinander verzwirnt sind. Sie sind durch radialen Druck oder Zug mit hoher Packungsdichte zu einem Faden verdichtet und durch die Ummantelung des Fadens fixiert. Aus dem Fadenmaterial können mit konventionellen Textilverarbeitungsmaschinen Gewebe, Gelege, Gestricke oder ähnliche Flächengebilde hergestellt werden. Die Fadenummantelung, deren Temperaturbeständigkeit kleiner ist als die Einsatztemperatur der Lagerungsmatte, wird bei erstmaliger Erwärmung zerstört, wobei die im Fadenmaterial gespeicherte Verformungsenergie der Garne freigesetzt wird. Die freigesetzte Verformungsenergie führt zu einer Aufweitung der Fäden, aus denen die Lagerungsmatte gefertigt ist. Entsprechend nimmt das Volumen des aus dem Fadenmaterial hergestellten Flächengebildes zu.

Die expandierende Wirkung des im Rahmen der erfindungsgemäßen Lehre eingesetzten Fadenmaterials kann durch Zugabe von Blähmittel, z. B. Vermiculit, Glimmer und/oder Graphit, noch verbessert werden. Gemäß einer bevorzugten Ausführung der Erfindung enthält das Fadenmaterial einen von den Garnen umgebenen Kern aus Blähmaterial oder weisen die das Fadenmaterial bildenden Garne eine Beschichtung aus Blähmaterial auf.

Die erfindungsgemäße Lagerungsmatte kann als Gelege, Gewebe, Gewirk oder Gestrick ausgebildet sein. Zweckmäßig ist das Flächengebilde viellagig ausgebildet und textiltechnisch auf Maß ohne Schnittkanten gefertigt. Durch den Wegfall von Schnittkanten kann die Ausblassicherheit der Lagerungsmatte noch verbessert werden. Als Kantenschutz weisen die Ränder des Flächengebildes vorzugsweise Nähte aus temperaturbeständigen Fäden auf. Geeignet sind Fäden, die bei der Arbeitstemperatur der Lagerungsmatte noch eine ausreichende Zugfestigkeit besitzen. In Betracht kommen Fäden aus Textilglas, SiO₂, Al₂O₃, Metall oder dergleichen. Zur weiteren Verbesserung des Kantenschutzes kann ein Gewebeband aus temperaturbeständigem Material an den Rändern angearbeitet und mit mindestens einem temperaturbeständigen Steppfaden fixiert werden. Als temperaturbeständige Materialien sind beispielsweise die vorstehend angegebenen Materialien geeignet.

Gemäß einer besonders bevorzugten Ausführung der Erfindung besteht die Lagerungsmatte aus einem Gelege, wobei das Fadenmaterial im Flächengebilde mit Steppnähten mechanisch verfestigt ist. Die Steppnähte sind dabei mit einem Nähfaden ausgeführt, dessen Temperaturbeständigkeit kleiner ist als die Betriebstemperatur der Lagerungsmatte. Bei Erhitzen der Lagerungsmatten wird der Nähfaden zerstört, wobei Verformungsenergie, die aus der Vorverdichtung resultiert, freigesetzt wird und die aus der Volumenzunahme des Fadenmaterials resultierende Expansionswirkung verstärkt. Besonders wirksam ist der beschriebene Effekt, wenn das Fadenmaterial durch die Steppnähte unter Zugspannung im Gelege fixiert ist.

## Patentansprüche

1. Lagerungsmatte für die Lagerung eines für die Reinigung von Kraftfahrzeugabgasen eingesetzten Abgaskatalysators in einem metallischen Katalysatorgehäuse, bestehend aus
1.1) einem zu einem textilen Flächengebilde verarbeiteten Fadenmaterial, das aus voluminösen, temperaturbeständigen und mit paralleler Ausrichtung zu einem Faden gebündelten Garnen sowie einer Fadenummantelung, die sich bei Erhitzung zersetzt, besteht, und
1.2) einem Kantenschutz aus temperaturbeständigen Fäden entlang den Rändern des Flächengebildes.

2. Lagerungsmatte nach Anspruch 1, **dadurch gekennzeichnet, dass** das Fadenmaterial aus texturierten Garnen aus anorganischen Stapelfasern oder Filamenten besteht, die parallel ausgerichtet zu Fäden mit einem Durchmesser zwischen 3 und 12 mm verdichtet sind.

3. Lagerungsmatte nach Anspruch 2, **dadurch gekennzeichnet, dass** die Garne aus Textilglasfasern, Basaltfasern, SiO₂-Fasern, Quarzfasern oder Aluminiumsilikatfasern bestehen.

4. Lagerungsmatte nach einem der Ansprüche 1 bis 3, **dadurch gekennzeichnet, dass** die Fadenummantelung aus um das Bündel geführten Nähfäden besteht.

5. Lagerungsmatte nach Anspruch 4, **dadurch gekennzeichnet, dass** die Ummantelung als Flechtwerk ausgebildet ist.

6. Lagerungsmatte nach einem der Ansprüche 1 bis 5, **dadurch gekennzeichnet, dass** die Fadenummantelung aus Baumwoll- oder Viskosefäden besteht.

7. Lagerungsmatte nach einem der Ansprüche 1 bis 6, **dadurch gekennzeichnet, dass** das Fadenmaterial einen von den Garnen umgebenen Kern aus Blähmaterial enthält und/oder dass die das Fadenmaterial bildenden Garne eine Beschichtung aus Blähmaterial aufweisen.

8. Lagerungsmatte nach Anspruch 7, **dadurch gekennzeichnet, dass** das Blähmaterial aus Vermiculit, Glimmer und/oder Graphit besteht.

9. Lagerungsmatte nach einem der Ansprüche 1 bis 8, **dadurch gekennzeichnet, dass** das Flächengebilde als Gelege, Gewebe, Gewirk oder Gestrick ausgebildet ist.

10. Lagerungsmatte nach einem der Ansprüche 1 bis 9, **dadurch gekennzeichnet, dass** das Flächengebilde textiltechnisch auf Maß ohne Schnittkanten gefertigt ist.

11. Lagerungsmatte nach einem der Ansprüche 1 bis 10, **dadurch gekennzeichnet, dass** das Fadenmaterial im Flächengebilde mit Steppnähten mechanisch verfestigt ist, wobei die Steppnähte mit einem Nähfaden ausgeführt sind, dessen Temperaturbeständigkeit kleiner ist als die Betriebstemperatur der Lagerungsmatte.

12. Lagerungsmatte nach Anspruch 11, **dadurch gekennzeichnet, dass** das Fadenmaterial unter Zugspannung mit den Steppnähten fixiert ist.

13. Lagerungsmatte nach einem der Ansprüche 1 bis 12, **dadurch gekennzeichnet, dass** die Ränder des Flächengebildes Nähte aus temperaturbeständigen Fäden, z. B. aus Textilglas, SiO₂, Al₂O₃ oder Metall, als Kantenschutz aufweisen.
